# EUROPÄISCHE PATENTSCHRIFT

(11) **EP 1 265 716 B1**
(45) Veröffentlichungstag und Bekanntmachung des Hinweises auf die Patenterteilung: **12.05.2004**
(21) Anmeldenummer: 01925455.6
(22) Anmeldetag: 15.03.2001
(51) Int. Cl.: B08B 9/04, F28G 1/12

(54) **VERFAHREN ZUM REINIGEN VON LEITUNGEN FÜR SCHMELZKLEBSTOFFE MIT EINEM ZUGEHÖRIGEN MOLCH**
METHOD FOR CLEANING CONDUITS FOR HOT-MELT-TYPE ADHESIVES BY MEANS OF AN APPURTENANT GO-DEVIL
PROCEDE DE NETTOYAGE DE CONDUITES POUR COLLES FUSIBLES AVEC UN ECOUVILLON

(30) Priorität: 21.03.2000 DE 10013916
(43) Veröffentlichungstag der Anmeldung: 18.12.2002
(73) Patentinhaber: Henkel Kommanditgesellschaft auf Aktien, 40589 Düsseldorf-Holthausen (DE)
(72) Erfinder: PETRY, Gerald, 41836 Hückelhoven (DE); NIXON, Andrew, 47877 Willich (DE); MAGUNIA, Robert, 74834 Elztal-Dallau (DE)
(86) Internationale Anmeldenummer: PCT/EP2001/002897
(87) Internationale Veröffentlichungsnummer: WO 2001/070421

(56) Entgegenhaltungen:
- WO-A-99/03607
- WO-A-99/23438
- DE-U- 9 407 228
- US-A- 3 731 701
- US-A- 5 358 573

## Beschreibung

Die Erfindung betrifft ein Verfahren zum Reinigen einer beheizbaren Leitung zur Förderung von flüssigem Schmelzklebstoff, insbesondere einem Schlauch, bei welchem ein Molch in ein Ende der Leitung eingeführt, mittels Druck gefördert und einem anderen Ende der Leitung entnommen wird. Weiterhin bezieht sich die Erfindung auf einen Molch zum Reinigen der Innenseite von beheizten, für die Förderung von verflüssigtem Schmelzklebstoff eingesetzten Leitungen, insbesondere Schläuchen, wobei der Molch im wesentlichen dem Leitungsquerschnitt angepaßt ist.

Bei der Verarbeitung von Schmelzklebstoff wird dieser in sogenannten Aufschmelzbecken aufgeschmolzen und mittels Pumpen zu den Auftragsdüsen gefördert. Die hierzu verwendeten Schläuche bestehen aus einer Teflon-Seele mit einem Metall-Stützgewebe und sind beheizbar, damit sich der Schmelzklebstoff nicht bereits innerhalb des Schlauches verfestigt. Bei der Verarbeitung von reaktiven, mit Feuchtigkeit aushärtenden Schmelzklebstoffen werden diese Schläuche ebenfalls verwendet.

Feuchtigkeitsvemetzende Polyurethan-Schmelzklebstoffe sind für besonders hochwertige Klebebindungen geeignet. Sie zeichnen sich durch sehr gute Adhäsionseigenschaften und ausgezeichnete Festigkeiten aus. Sie werden bei etwa 120 °C aufgetragen und reagieren nach dem Erkalten mit Feuchtigkeit zu hochmolekularen, nicht schmelzbaren Verbindungen. Die hohe Endfestigkeit wird erreicht durch die chemische Reaktion freier isocyanatgruppen mit Oberflächenfeuchtigkeit sowie mit H-aktiven chemischen Gruppen der Substratoberflächen. Daneben zeichnen sie sich durch hohe Chemikalienbeständigkeit, z. B. gegen Druckfarbenöl, sowie durch hohe Temperatur- und Alterungsbeständigkeit aus. Sie erfordern besondere Schmelz- und Auftragsgeräte und einen hohen Verarbeitungsaufwand.

Diese festen, schnellvernetzenden Schmelzklebstoffe auf Polyurethan-Basis werden angewendet in der Automobilindustrie, der Holz- und Möbelindustrie, der graphischen Industrie und der Buchbinderei, der Textilindustrie, der Schuhindustrie, der PE-Sackherstellung, in der allgemeinen Industrie und der Elektrik und Elektronik. Als Beispiele für diese Klebstoffe seien die von der Anmelderin hergestellten Produkte mit den Markennamen Purmelt, Macroplast QR und Terorehm MC genannt.

Die Verarbeitung der reaktiven Schmelzklebstoffe ist nicht unproblematisch. Die Teflon-Seele der oben genannten Schläuche soll zwar eine absolute Feuchtigkeitsdichtheit gewährleisten, welche in der Praxis jedoch nicht gegeben ist. Durch die Teflon-Seele wandern nämlich immer geringe Mengen an Feuchtigkeit hindurch, welche bei der Verwendung üblicher, nicht mit Feuchtigkeit reagierender Schmelzklebstoffe keine Probleme verursachen, jedoch bei der Verarbeitung von reaktiven Schmelzklebstoffen zu einer Vernetzung dieses Klebstoffes an der Innenseite des Schlauches führen. Dieser Effekt tritt in der Regel erst nach einigen Monaten auf. Die Anhärtungen lassen sich auch durch das regelmäßige Spülen der Anlage mit einem sogenannten Reinigungs-Schmelzklebstoff nicht entfernen.

Diese Anhärtungen an der Innenseite des Schlauches sind aus mehreren Gründen von erheblichem Nachteil. Einerseits können sich einzelne Partikel aus der ausgehärteten Klebstoffschicht lösen. Insbesondere beim neuen Anfahren der Anlage nach einem längeren Stillstand, z. B. nach einem Wochenende, löst sich ein Teil der ausgehärteten Klebstoffhaut, wird mit dem flüssigen Klebstoff zu den Auftragsdüsen gefördert und verstopft die Auftragsdüsen, die typischerweise eine Öffnung von 30 µm haben. Sofern die Auftragsdüse nicht verstopft werden, gelangen die Partikel auf die aufgetragene Klebstoffschicht des Werkstückes, wobei sie in der Regel stören. Derartige Partikel machen sich z. B. unterhalb einer Dekorschicht bemerkbar. Außerdem wächst die ausgehärtete Haut an der Innenseite des Schlauches immer stärker an, so dass der freie Innenquerschnitt des Schlauches mit der Zeit abnimmt, bis die benötigte Menge an Klebstoff nicht mehr durch den Schlauch gefördert werden kann.

Zur Lösung dieser Probleme sind mehrere Möglichkeiten bekannt. Zum einen werden die Schläuche, wenn sie vollständig verstopft sind, ersetzt. Da die Schläuche aufgrund des aufwendigen Aufbaus relativ teuer sind, sollte diese Lösungsmöglichkeit vermieden werden. Alternativ können die Schläuche auch regelmäßig an einen Spezialisten eingeschickt werden, bei dem sie mit einem Lösungsmittel oder auf mechanische Weise gereinigt werden. Diese Vorgehensweise erfordert die Anschaffung von 2 Sätzen Schläuche. Die hohen Kosten der Schläuche lassen diese Lösung ebenfalls als nicht besonders günstig erscheinen.

Bekannt ist weiterhin, eine kleine Bürste in Form eines Molches durch den Schlauch zu bewegen. Ein derartiger Molch entspricht dem eingangs genannten Molch zum Reinigen der Innenseite der Leitungen. Bei dieser Reinigung kann der mit einer Bürste versehene Molch nur einmal verwendet werden. Sofern die Borsten aus Textil bestehen, ist der Reinigungserfolg relativ gering. Sofern die Borsten andererseits aus Metall, z. B. Bronze, bestehen, wird zwar eine bessere Reinigung erreicht, aber die aus Teflon bestehende Innenwand des Schlauches wird dabei beschädigt. Die dabei verursachten Riefen und Rillen führen nach dieser Reinigung zu einem verstärktem Anlagern von Schmelzklebstoff. Ein weiterer Nachteil sind die hohen Kosten dieses mit Bürsten versehenen Molches. Ein derartiger Molch wird übrigens von der Fa. Slautterback, USA, vertrieben.

Aus der Druckschrift DE 195 13 104 A1 ist ein Molch zum Reinigen oder Überprüfen von Rohrleitungen bekannt, dessen garnrollenähnlicher Grundkörper aus einem gummielastischen Material besteht und mindestens im Bereich der Laufflächen mit einem Fluorpolymer beschichtet ist. Diese Molche haben den Nachteil, daß sie wegen der fehlenden Temperaturbeständigkeit nicht zur Reinigung von erwärmten Leitungen einsetzbar sind. Aufgrund des komplizierten Aufbaus mit der Beschichtung sind sie teuer und eignen sich daher nicht für den einmaligen Gebrauch, sondern sollen wiederverwendet werden.

Weiterhin sind in der Druckschrift US 5.265.302 Molche zum Entfernen von harten, dicken Belägen an der Rohrleitungsinnenflächen beschrieben, die mittels hydraulischem Druck durch die Rohrleitung gepreßt werden. Um die Abkratzwirkung zu erhöhen, weist der im wesentlichen zylindrische Molchkörper außenseitig harte Dorne auf. Für einen mehrmaligen Gebrauch sind die Dorne austauschbar ausgebildet. Diese Molche haben den Nachteil, daß keine Reinigung von Leitungen mit empfindlichen Oberflächen gestatten.

Der Erfindung liegt daher die Aufgabe zugrunde, eine Reinigungsverfahren für Schmelzklebstoff-Leitungen zu entwickeln, mit welchem auf einfache, schnelle und preiswerte Weise die Leitungen vor Ort und Stelle wieder für den Schmelzklebstoff, insbesondere von reaktivem, mit Feuchtigkeit aushärtenden Schmelzklebstoff, durchgängig gemacht werden können. Weiterhin ist es Aufgabe der Erfindung, einen Molch für die Anwendung in diesem Verfahren bereitzustellen.

Diese Aufgabe wird erfindungsgemäß durch ein Verfahren mit den Merkmalen gemäß Patentanspruch 1 gelöst. Der erfindungsgemäße Molch weist die Merkmale gemäß Patentanspruch 6 auf. In der Unteransprüchen sind weitere vorteilhafte Ausbildungen der Erfindung dargestellt.

Bei dem erfindungsgemäßen Verfahren werden die Ablagerungen von der Innenseite der Leitung vom Molch abgelöst und in Bewegungsrichtung vor diesem hergeschoben werden, wobei das in Bewegungsrichtung vordere Ende des Molch mit seiner Außenseite über seinen Umfang dicht an der Innenseite der Leitung anliegt. Das Verfahren erlaubt die Entfernung von Ablagerungen an der Innenseite der Leitung und/oder eines vollständig zu gesetzten Innenraumes.

Das eine Ende des Molches dient zur Aufnahme des Druckes, vorzugsweise vom fließenden Schmelzklebstoff erzeugten Druckes, um den Molch in Richtung auf das Auftragsgerät hin zu bewegen. Das andere Ende des Molches dient zum Ablösen der ausgehärteten Ablagerungen, wie einer Haut an der Innenseite des Schlauches, wobei nach dem Ablösen dieser ausgehärtete Klebstoff vor dem Molch hergeschoben wird.

Weiterhin wird vorgeschlagen, dass man den Molch mittels durch die Leitung gefördertem aufgeschmolzenen Schmelzklebstoff durch die Leitung bewegt. Bei diesem Schmelzklebstoff kann es sich um den zu verarbeitenden Klebstoff, aber auch um einen sogenannten "Reinigungs-Schmelzklebstoff" handeln. Ein derartiger Reinigungs-Schmelzklebstoff wird beispielsweise in die Anlage vor einem längeren Stillstand eingebracht, damit die mit dem Klebstoff in Berührung kommenden Anlageteile während der Stillstandszeit nicht durch aushärtenden Klebstoff verunreinigt werden.

Es ist vorteilhaft, wenn der Schmelzklebstoff bei einem Druck bis 80 bar, insbesondere bei einem Druck 30 bis 50 bar, durch die Leitung gefördert wird, um den Molch durch die Leitung zu bewegen. Unter Umständen ist auch ein Druck von 5 bis 10 bar ausreichend. Die Höhe des Druckes ist auch abhängig von dem Leitungsquerschnitt.

Um den ausgehärteten reaktiven Schmelzklebstoff in den plastischen Zustand zu versetzen, so dass diese, an der Innenseite der Leitung anhaftende Haut besonders leicht vom erfindungsgemäßen Molch abgeschält werden kann, ist es von Vorteil, wenn man das Innere der Leitung auf eine Temperatur von 130 °C bis 200 °C aufheizt. Eine Aufheizung ist ohnehin erforderlich, wenn man den Molch mit dem aufgeschmolzenen Schmelzklebstoff durch die Leitung bewegt.

Der erfindungsgemäße Molch zur Durchführung des vorher beschriebenen Verfahrens hat einen in Längsachse rotationssymmetrischen Körper. Vorteilhaft weist dieser zwischen seinen Enden im mittleren Bereich eine taillenförmige Ausnehmung auf. Hierdurch ist der Molch in sich flexibel und beweglicher. Einem Verklemmen in der Leitung ist vorgebeugt. Auch ermöglicht die taillenförmige umlaufende Ausnehmung im mittleren Bereich des Molches das einfache Bewegen des Molches in Kurven der Leitung, wie sie in der Praxis relativ häufig auftreten, ohne dass ein Spalt zwischen der Außenfläche des vorderen und hinteren Endes des Molches und der Innenwand des Schlauches entsteht. Während der Reinigung, also im Betriebszustand, hat der Molch an der Außenseite eine oder mehrere Berührungslinien bzw. -flächen mit der zugeordneten Innenseite der Leitung, je nach dem ob der Körper von einer Kugel oder Kegelstumpf gebildet ist.

Mit diesem Molch kann man in regelmäßigen Abständen, z. B. nach jedem Spülvorgang, die Leitung reinigen. Dazu wird der Molch in die Leitung eingeführt und mit dem Produkt durch die Leitung gedrückt. Der Molch nimmt aufgrund seiner Wandgängigkeit alle Anhärtungen mit und sorgt für einen sauberen Schlauch.

Weiterhin wird vorgeschlagen, dass der Molch bzw, sein Körper aus einem bis zu einer Temperatur von mindestens 150 °C stabilen Kunststoff, wie aus Polytetrafluorethylen (PTFE), aus Polyetheretherketon (PEEK), aus Polyetherimid (PEI), aus Polyethersulfon (PESU), aus Polysulfon (PSU) oder einem glasfaserverstärkten Kunststoff, besteht. Der Molch kann vorzugsweise als ein einfaches Spritzgußteil ausgeführt sein. Aufgrund seiner geringen Kosten ist es daher unschädlich, daß es sich um einen Einwegartikel handelt.

Der erfindungsgemäße Molch kann mehrere unterschiedliche geometrische Formen aufweisen. Besonders bevorzugt ist es, wenn das vordere Ende des Molches die Form eines nach vorne geöffneten Hohlkegels hat. Alternative Ausführungsformen des einen Endes des Molches sind ein in Längsachse konkaver Hohlkörper, insbesondere ein Hohlkegelstumpf oder Hohlkegel.

Außerdem ist es von Vorteil, wenn das vordere Ende des Molches in radialer Richtung elastisch ist. Die Begriffe "vorne" und "vorderes Ende" beziehen sich auf die Bewegungsrichtung des Molches bei seinem Einsatz. Der nach vorne geöffnete Hohlkegel ermöglicht einen Außendurchmesser, welcher geringfügig größer als der Innendurchmesser des Schlauches ist, so dass sich das vordere Ende des Molches an die Innenseite des Schlauches anpreßt. Die Form des Hohlkegels ermöglicht dabei eine gewisse Flexibilität, welche insbesondere beim Durchfahren von Kurven von Vorteil ist.

Es können aber auch Molche eingesetzt werden, deren vorzugsweise vorderes Ende die Form eines Vollkörpers, insbesondere einer Kugel, eines Kegelstumpfs oder Kegels, hat. Das andere hintere Ende ist als scheibenförmiger Ansatz ausgebildet.

Auch Molche mit einen zum Mittelpunkt punktsymmetrischen Körper, insbesondere eine Hantel sind einsetzbar.

Unabhängig von der geometrischen Form des vorderen Endes des Molches ist es von Vorteil, wenn dieses Ende in radialer Richtung elastisch bzw. flexibel ist. Das vordere Ende sollte bei einem auf das hintere Ende einwirkenden Druck sich radial ausdehnen, damit es sich im Schlauch geringfügig aufweitet und dicht an der Innenseite des Schlauches anliegt. Auf diese Weise können ohne weiteres auch Klebstoff-Schläuche gereinigt werden, deren Innendurchmesser an den Enden geringfügig kleiner als im übrigen Bereich ausfallen. Diese Verengungen an den Enden der Schläuche finden sich häufig bei den in der Praxis eingesetzten Schläuchen, deren Enden durch Verschraubung mit den jeweiligen Anschlußstutzen verbunden werden. Molche mit einem elastischen vorderen Ende lassen sich in derartige Schläuche einführen, liegen dennoch dicht an der Innenseite der Schläuche an und lassen sich problemlos am anderen Ende des Schlauches wieder herausdrücken.

Ferner wird vorgeschlagen, dass das Verhältnis von Länge zu Durchmesser des Molches bei 1,5 bis 3 liegt.

Die Anordnung aus einer beheizbaren Leitung, insbesondere einem Schlauch aus einer Teflon-Seele mit Metall-Stützgewebe, zur Förderung von flüssigem Schmelzklebstoff und einem darin angeordneten Molch ist derart ausgebildet, daß der Innendurchmesser der Leitung größer als der Außendurchmesser des Molches ist. Standardabmessungen sind bei einem Innendurchmesser der Leitung von etwa 8 mm und ein Außendurchmesser des Molches von etwa 6 mm, bei einem Innendurchmesser der Leitung von etwa 13 mm und ein Außendurchmesser des Molches etwa 10 mm.

Der erfindungsgemäße Molch dient zum Reinigen einer beheizbaren Leitung zur Förderung von flüssigem Schmelzklebstoff, insbesondere einem Schlauch, der aus einer Teflon-Seele und ein Metall-Stützgewebe besteht.
Vorteilhaft ist, daß die Außenseite des Molches an seinen beiden Enden dem Innendurchmesser der Leitung derart angepaßt ist, dass die Außenseite des Molches dicht, vorzugsweise dichtend, an der Innenseite der Leitung über ihren gesamten Umfang anliegt, und im mittleren Bereich eine taillenförmige umlaufende Ausnehmung aufweist.

Wenn die Außenseite des Molchs mit der Innenseite der Leitung eine Dichtung bildet, bildet der Molch beim Reinigen eine Sperre für vor und hinter dem Molch angeordnetes Material und trennt diese voneinander.

Im folgenden werden Ausführungsbeispiele der Erfindung anhand von Zeichnungen näher beschrieben. Es zeigen
- Figur 1: einen Längsschnitt durch ein besonders bevorzugtes Ausführungsbeispiel des erfindungsgemäßen Molches,
- Figur 2: ein weiteres Beispiel für den erfindungsgemäßen Molch, ebenfalls im Längsschnitt,
- Figur 3: ein drittes Beispiel des erfindungsgemäßen Molches im Längsschnitt,
- Figur 4: ein viertes Beispiel des erfindungsgemäßen Molches im Längsschnitt,
- Figur 5a: eine Darstellung des Molches innerhalb des zu reinigenden Schlauches im Längsschnitt zu Beginn des Reinigungsvorganges,
- Figur 5b: eine Darstellung entsprechend Figur 5a zu einem späteren Zeitpunkt des Reinigungsvorganges und
- Figur 6: eine Darstellung entsprechend Figur 5a bei gebogenem Schlauch.

In allen Zeichnungen haben gleiche Bezugszeichen die gleiche Bedeutung und werden daher gegebenenfalls nur einmal erläutert. Sämtliche in den Figuren dargestellten Molche sind, ebenso wie die entsprechenden zu reinigenden Schläuche, zylindersymmetrisch. Die Bewegungsrichtung der Molche ist mit einem Pfeil 1 dargestellt.

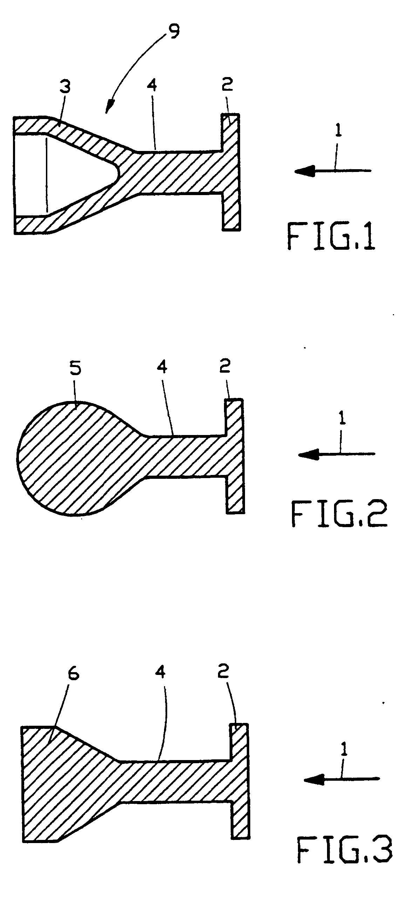

Der in Figur 1 gezeichnete, besonders bevorzugte Molch besteht aus PTFE und weist an seinem hinteren Ende einen scheibenförmigen Ansatz 2 auf, dessen Durchmesser dem Innenquerschnitt des zu reinigenden Schlauches angepaßt ist und der zur Aufnahme des Druckes des flüssigen Schmelzklebstoffs dient, der den Molch in die durch den Pfeil 1 gekennzeichnete Richtung treibt.

Am anderen, vorderen Ende ist ein nach vorne geöffneter Hohlkegel 3 angeformt, der nach vorne geöffnet ist. Die äußeren Enden des Hohlkegels sind hohlzylindrisch ausgebildet, wobei der Außendurchmesser des Hohlzylinders wiederum dem Innendurchmesser des zu reinigenden Schlauches entspricht.

Im mittleren Bereich ist eine taillenförmige umlaufende Ausnehmung 4 vorgesehen, so dass hier der Molch nicht an der Innenwand des Schlauches anliegt. Die Ausnehmung 4 ermöglicht die problemlose Bewegung des Molches auch innerhalb von Kurven, also an geknickten Schlauchbereichen, wie sie in der Praxis häufig auftreten.

Bei den Ausführungen nach den Figuren 2 und 3 ist das hintere Ende ebenso wie bei dem besonders bevorzugten Molch nach Figur 1 als scheibenförmiger Ansatz 2 ausgebildet. Das vordere Teil ist jedoch nicht als Hohlkegel, sondern als Kugel 5 (Figur 2) bzw. als Vollkegel 6 (Figur 3) ausgebildet.

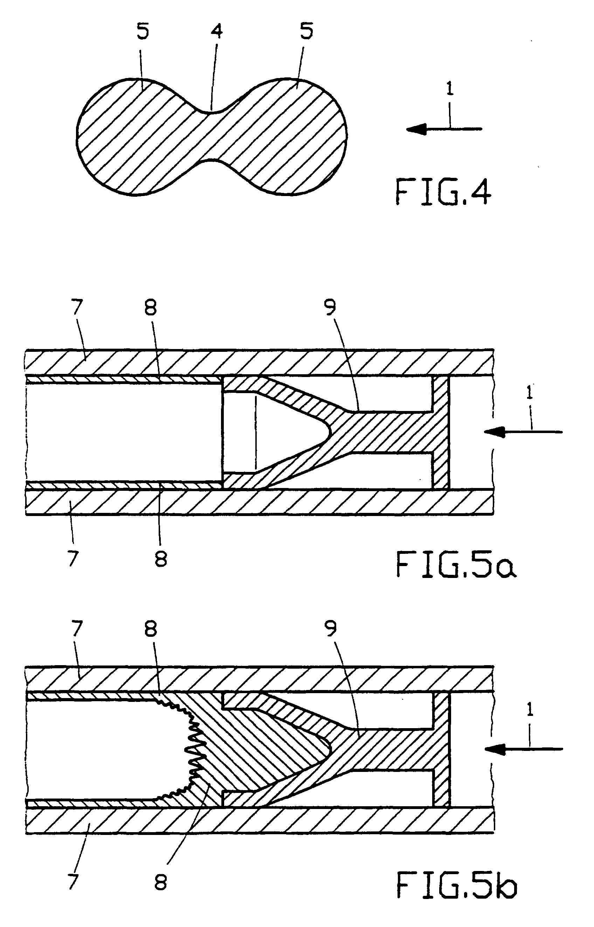

Eine weitere Variante des Molches ist in Figur 4 dargestellt. Hier sind sowohl der vordere als auch der hintere Teil als Kugel 5 mit einer zwischen ihnen angeordneten taillenförmigen umlaufenden Ausnehmung 4 ausgebildet.

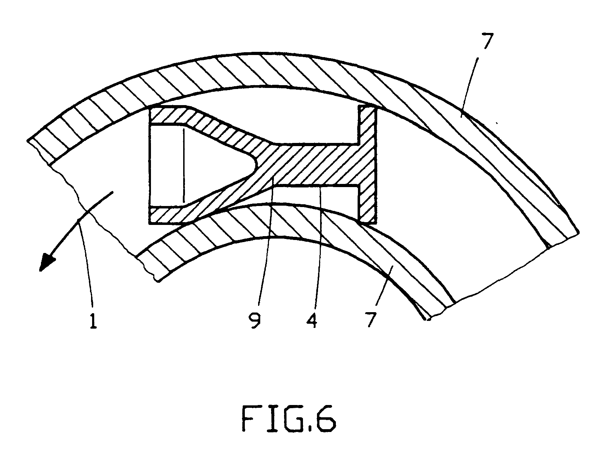

Die Arbeitsweise des Molches nach Figur 1 ist in den Figuren 5a und 5b dargestellt. Wenn sich an der Innenseite des Schlauches 7, der zur Förderung von reaktivem, mit Feuchtigkeit vemetzenden Schmelzklebstoff benutzt wird, eine ausgehärtete Klebstoffhaut 8 gebildet hat, wird der nicht dargestellte Anschluß des Schlauches 7 an das ebenfalls nicht dargestellte Aufschmelzbecken gelöst und ein Molch 9 eingeführt, wobei das als Hohlkegel 3 ausgebildete Ende in Förderrichtung des Schmelzklebstoffes, dargestellt durch den Pfeil 1, zeigt. Der Anschluß des Schlauches 7 wird wieder an den Stutzen des Aufschmelzbeckens angeschlossen und das andere Schlauchende geöffnet, so dass der Schmelzklebstoff frei austreten kann. Zu Beginn wird der Schlauch 7 beheizt, damit die an der Innenseite anhaftende Klebstoff-Haut 8 plastisch wird und sich leichter ablösen läßt. Nach dem Einschalten der Klebstoffpumpe übt der Klebstoff einen Druck in Richtung des Pfeiles 1 auf den Molch 9 aus, so dass das vordere Ende des Molches 9 die Klebstoff-Haut 8 von der Innenseite des Schlauches 7 vollständig ablöst. Nach dem Abschälen des ausgehärteten Klebstoffs faltet sich dieser zusammen, wie es insbesondere aus Figur 5b ersichtlich ist. Dieser ausgehärtete Klebstoff sammelt sich innerhalb des Hohlkegels 3 und zusätzlich weiter vorne vor dem vorderen Ende des Molches 9 und löst seinerseits wieder die restliche Klebstoff-Haut 8 von der Innenseite des Schlauches 7 ab und schiebt sie vor sich her, bis schließlich diese unbrauchbaren, ausgehärteten Klebstoffreste zusammen mit dem Molch 9 aus dem anderen Ende des Schlauches 7 herausgedrückt werden. Der Schlauch ist nun vollständig gereinigt, ohne dass die aus Teflon bestehende Innenseite des Schlauches beschädigt worden ist.

Figur 6 zeigt schließlich die Bedeutung der taillenförmigen Ausnehmung 4 für die Betriebsweise bei einem gebogenen Schlauch 7. Hier tritt trotz des sehr stark gebogenen Schlauches kein Verklemmen des Molches 9 auf. Der Deutlichkeit halber ist die Krümmung des Schlauches 7 in Figur 6 übertrieben dargestellt. Die in der Praxis auftretenden Krümmungen sind deutlich geringer.

Der erfindungsgemäße Molch ist auch mit Vorteil bei einem Produktwechsel des Klebstoffs einzusetzen, da er eine scharfe Trennung zwischen zwei Produkten ermöglicht. Er kann auch in Verbindung mit einem sogenannten "Reinigungs-Schmelzklebstoff" eingesetzt werden, um vor längeren Stillstandszeiten den Reinigungs-Schmelzklebstoff in die Anlage einzubringen und danach wieder aus der Anlage zu entfernen.

Typische Durchmesser der Molche, die dem Innendurchmesser der Schläuche 7 entsprechen, sind 5 bis 15 mm.

Ausdrücklich wird noch einmal darauf hingewiesen, dass der erfindungsgemäße Molch sowie das erfindungsgemäße Verfahren auch in Verbindung mit üblichen, nicht reaktiven Schmelzklebstoffen geeignet sind.

### Bezugszeichenliste

- 1: Bewegungsrichtung
- 2: scheibenförmiger Ansatz
- 3: Hohlkegel
- 4: taillenförmige umlaufende Ausnehmung
- 5: Kugel
- 6: Vollkegel
- 7: Schlauch, Leitung
- 8: Klebstoff-Ablagerung
- 9: Molch

## Patentansprüche

1. Verfahren zum Reinigen einer Leitung (7) zur Förderung einer Flüssigkeit, insbesondere zum Reinigen eines Schlauches, bei welchem im Reinigungszustand ein Molch (9) in die Leitung (7) eingeführt, mittels Fluiddruck durch die Leitung (7) gefördert sowie der Leitung (7) wieder entnommen wird und dabei vom Molch (9) Ablagerungen (8) von der Innenseite der Leitung (7) abgelöst und in Bewegungsrichtung (1) vor diesem hergeschoben werden,
**dadurch gekennzeichnet,**
**dass** die Leitung (7) eine beheizbare Leitung (7) zur Förderung von flüssigem Schmelzklebstoff ist und im Reinigungszustand auf eine Temperatur von 130°C-200°C aufgeheizt wird.

2. Verfahren nach Anspruch 1,
**dadurch gekennzeichnet,**
**dass** im Reinigungszustand in der Leitung (7) ein Druck bis 80 bar, vorzugsweise zwischen 30 bis 50 bar, eingestellt wird.

3. Verfahren nach Anspruch 1 oder 2,
**dadurch gekennzeichnet,**
**dass** der Molch (9) von dem zu verarbeitenden Schmelzklebstoff, insbesondere einem reaktiven, mit Feuchtigkeit aushärtenden Schmelzklebstoff, gefördert wird.

4. Verfahren nach Anspruch 1 oder 2,
**dadurch gekennzeichnet,**
**dass** der Molch (9) von einem Reinigungs-Schmelzklebstoff gefördert wird.

5. Verfahren nach einem der vorangehenden Ansprüche,
**dadurch gekennzeichnet,**
**dass** der Molch (9) als Einwegartikel genutzt wird.

6. Molch zur Durchführung des Verfahrens nach einem der Ansprüche 1 bis 5, mit einem in Längsachse rotationssymmetrischen Körper,
**dadurch gekennzeichnet,**
**dass** der Körper aus einem bis zu einer Temperatur von mindestens 150°C hitzebeständigen Kunststoff besteht.

7. Molch nach Anspruch 6,
**dadurch gekennzeichnet,**
**dass** der Körper aus Polytetrafluorethylen (PTFE), aus Polyetheretherketon (PEEK), aus Polyetherimid (PEI), aus Polyethersulfon (PESU), aus Polysulfon (PSU) oder einem glasfaserverstärkten Kunststoff besteht.

8. Molch nach Anspruch 6 oder 7,
**gekennzeichnet durch**
eine zwischen seinen Enden im mittleren Bereich angeordnete, taillenförmige Ausnehmung (4).

9. Molch nach einem der Ansprüche 6 bis 8,
**gekennzeichnet durch** einen Körper, dessen Außenseite eine oder mehrere Berührungslinien bzw. -flächen mit der zugeordneten Innenseite der Leitung (7) hat.

10. Molch nach einem der Ansprüche 6 bis 9,
**gekennzeichnet durch**
ein in Form eines in Längsachsrichtung konkaven Hohlkörpers, insbesondere eines Hohlkegelstumpfs (3) oder Hohlkegels ausgebildetes Ende.

11. Molch nach einem der Ansprüche 6 bis 9,
**gekennzeichnet durch**
ein in Form eines Vollkörpers, insbesondere einer Kugel (5), eines Kegelstumpfs (6) oder Kegels ausgebildetes Ende.

12. Molch nach einem der Ansprüche 6 bis 11,
**gekennzeichnet durch**
ein in Form eines scheibenförmigen Ansatzes (2) ausgebildetes Ende.

13. Molch nach einem der Ansprüche 6 bis 11,
**gekennzeichnet durch**
einen zum Mittelpunkt punktsymmetrisch, insbesondere hantelförmig, ausgebildeten Körper.

14. Molch nach einem der Ansprüche 6 bis 13,
**dadurch gekennzeichnet,**
**dass** das im Reinigungszustand vordere Ende radial elastisch ausgebildet ist.

15. Molch nach einem der-Ansprüchen 6 bis 14,
**dadurch gekennzeichnet,**
**dass** das Verhältnis von Länge zu Durchmesser bei 1,5 bis 3 beträgt.

16. Anordnung aus einer Leitung (7), insbesondere einem Schlauch aus einer Teflon-Seele mit Metall-Stützgewebe, zur Förderung von flüssigem Schmelzklebstoff und einem darin bewegbar anordbaren Molch (9) nach einem der Ansprüche 6 bis 15,
**dadurch gekennzeichnet,**
**dass** die Leitung (7) auf 130°C-200°C aufheizbar ist.

17. Anordnung nach Anspruch 16,
**dadurch gekennzeichnet,**
**dass** der Innendurchmesser der Leitung (7) größer als der Außendurchmesser des Molches (9) ist.

18. Anordnung nach Anspruch 17,
**dadurch gekennzeichnet,**
**dass** der Innendurchmesser der Leitung (7) etwa 8 mm und der Außendurchmesser des Molches (9) etwa 6 mm beträgt.

19. Anordnung nach Anspruch 17,
**dadurch gekennzeichnet,**
**dass** der Innendurchmesser der Leitung (7) etwa 13 mm und der Außendurchmesser des Molches (9) etwa 10 mm beträgt.

20. Verwendung eines Molches (9) mit den Merkmalen eines der Ansprüche 6-15 zum Reinigen eines beheizbaren, eine Teflon-Seele und eine Metall-Stützgewebe aufweisenden Schlauches zur Förderung von flüssigem Klebstoff.

21. Verwendung nach Anspruch 20, wobei die Außenseite des Molches (9) an dessen beiden Enden- dem Innendurchmesser der Leitung (7) derart angepasst ist, dass die Außenseite des Molches (9) dort dicht an der Innenseite der Leitung über ihren gesamten Umfang anliegt und im mittleren Bereich eine taillenförmige, umlaufende Ausnehmung aufweist.

22. Verwendung nach Anspruch 20 oder 21, wobei die Außenseite des Molchs (9) mit der Innenseite der Leitung (7) eine Dichtung bildet, so dass im Reinigungszustand vor und hinter dem Molch (9) angeordnetes Material voneinander getrennt ist.

## Claims

1. A process for cleaning a pipe (7) for transporting a liquid, more particularly for cleaning a hose, in which - in the cleaning mode - a pipe pig (9) is introduced into the pipe (7), transported through the pipe (7) by fluid pressure and then removed from the pipe (7), deposits (8) being removed from the inside of the pipe (7) by the pipe pig (9) and being pushed away in front of the pipe pig in the direction of movement (1), **characterized in that** the pipe (7) is a heatable pipe (7) for transporting liquid hotmelt adhesive and, in the cleaning mode, is heated to a temperature of 130 to 200°C.

2. A process as claimed in claim 1, **characterized in that**, in the cleaning mode, a pressure of up to 80 bar and preferably between 30 and 50 bar is established in the pipe (7).

3. A process as claimed in claim 1 or 2, **characterized in that** the pipe pig (9) is transported by the hotmelt adhesive to be processed, more particularly a reactive moisture-curing hotmelt adhesive.

4. A process as claimed in claim 1 or 2, **characterized in that** the pipe pig (9) is transported by a cleaning hotmelt adhesive.

5. A process as claimed in any of the preceding claims, **characterized in that** the pipe pig (9) is non-reusable.

6. A pipe pig for carrying out the process claimed in any of claims 1 to 5 comprising a body which is longitudinally symmetrical in rotation, **characterized in that** the body consists of a plastic resistant to heat up to a temperature of at least 150°C.

7. A pipe pig as claimed in claim 6, **characterized in that** the body consists of polytetrafluoroethylene (PTFE), polyether ether ketone (PEEK), polyether imide (PEI), polyether sulfone (PESU), polysulfone (PSU) or a glass-fibre-reinforced plastic.

8. A pipe pig as claimed in claim 6 or 7, **characterized by** a waist-like recess (4) in the central region between its ends.

9. A pipe pig as claimed in any of claims 6 to 8, **characterized by** a body of which the outside has one or more lines or areas of contact with the associated inside of the pipe (7).

10. A pipe pig as claimed in any of claims 6 to 9, **characterized by** an end in the form of a longitudinally concave hollow body, more particularly a hollow frustum (3) or hollow cone.

11. A pipe pig as claimed in any of claims 6 to 9, **characterized by** an end in the form of a solid body, more particularly a sphere (6), a frustum (6) or cone.

12. A pipe pig as claimed in any of claims 6 to 11, **characterized by** an end in the form of a disk-shaped flange (2).

13. A pipe pig as claimed in any of claims 6 to 11, **characterized by** a body which is point symmetrical, more particularly dumbbell-shaped, towards its centre.

14. A pipe pig as claimed in any of claims 6 to 13, **characterized in that** the front end in the cleaning mode is radially elastic.

15. A pipe pig as claimed in any of claims 6 to 14, **characterized in that** the length-to-diameter ratio is 1.5 to 3:1.

16. An arrangement of a pipe (7), more particularly a hose of a Teflon core and a metal supporting fabric, for transporting liquid hotmelt adhesive and a pipe pig (9) as claimed in any of claims 6 to 15 arranged for displacement therein, **characterized in that** the pipe (7) is heatable to 130-200°C.

17. An arrangement as claimed in claim 16, **characterized in that** the internal diameter of the pipe (7) is greater than the external diameter of the pipe pig (9).

18. An arrangement as claimed in claim 17, **characterized in that** the internal diameter of the pipe (7) is about 8 mm and the external diameter of the pipe pig (9) about 6 mm.

19. An arrangement as claimed in claim 17, **characterized in that** the internal diameter of the pipe (7) is about 13 mm and the external diameter of the pipe pig (9) about 10 mm.

20. The use of a pipe pig (9) with the features of any of claims 6 to 15 for cleaning a heatable hose comprising a Teflon core and a metal supporting fabric for transporting liquid adhesive.

21. The use claimed in claim 20, **characterized in that** the outside of the pipe pig (9) is adapted at both ends to the internal diameter of the pipe (7) so that the outside of the pipe pig (9) bears tightly against the inside of the pipe over its entire circumference at those ends and has a waist-like encircling recess at its centre.

22. The use claimed in claim 20 or 21, **characterized in that** the outside of the pipe pig (9) forms a seal with the inside of the pipe (7) so that, in the cleaning mode, material in front of the pipe pig (9) is separated from material behind the pipe pig (9).

## Revendications

1. Procédé de nettoyage d'une conduite (7) destinée à véhiculer un liquide, en particulier procédé de nettoyage d'un flexible, dans lequel, à l'état de nettoyage, un écouvillon (9) est introduit dans la conduite (7), puis transporté à travers la conduite (7) par pression du fluide et retiré ensuite de la conduite (7), l'écouvillon (9) décollant des dépôts (8) de la face intérieure de la conduite (7) et les poussant dans le sens du déplacement (1) à l'avant de ce dernier,
**caractérisé en ce que** la conduite (7) est une conduite (7) pouvant être chauffée et destinée au transport de colle fusible liquide et **en ce qu'**à l'état de nettoyage, elle est chauffée à une température située entre 130° C et 200 ° C.

2. Procédé selon la revendication 1, **caractérisé en ce qu'**à l'état de nettoyage, une pression jusqu'à 80 bars, située de préférence entre 30 et 50 bars est réglée dans la conduite (7).

3. Procédé selon l'une quelconque des revendications 1 ou 2, **caractérisé en ce que** l'écouvillon (9) est transporté par la colle fusible devant être traitée, notamment par une colle fusible réactive, durcissant à l'humidité.

4. Procédé selon l'une quelconque des revendications 1 ou 2, **caractérisé en ce que** l'écouvillon (9) est transporté par une colle fusible de nettoyage.

5. Procédé selon l'une quelconque des revendications précédentes, **caractérisé en ce que** l'écouvillon (9) est utilisé sous forme d'article jetable.

6. Ecouvillon destiné à réaliser le procédé selon l'une quelconque des revendications 1 à 5, avec un corps à rotation symétrique dans l'axe longitudinal **caractérisé en ce que** le corps est constitué d'une matière plastique thermo-résistante jusqu'à une température de 150 ° C minimum.

7. Ecouvillon selon la revendication 6, **caractérisé en ce que** le corps est constitué en polytétrafluoréthylène (PTFE), en polyétheréther-cétone (PEEK), en polyéther imide (PEI), en polyéther sulfone (PESU), en poly sulfone (PSU) ou en matière plastique renforcée par des fibres de verre.

8. Ecouvillon selon l'une quelconque des revendications 6 ou 7, **caractérisé par** un évidement (4) en forme de I, disposé dans sa zone médiane, entre ses extrémités.

9. Ecouvillon selon l'une quelconque des revendications 6 à 8, **caractérisé par** un corps, dont la face externe présente une ou plusieurs lignes ou surfaces de contact avec la face interne associée de la conduite (7).

10. Ecouvillon selon l'une quelconque des revendications 6 à 9, **caractérisé par** une extrémité conçue sous forme d'un corps creux concave en direction de l'axe longitudinal, notamment d'un cône tronqué creux (3) ou d'un cône creux.

11. Ecouvillon selon l'une quelconque des revendications 6 à 9, **caractérisé par** une extrémité conçue sous forme d'un corps plein, notamment d'une sphère (5) d'un cône tronqué (6) ou d'un cône.

12. Ecouvillon selon l'une quelconque des revendications 6 à 11, **caractérisé par** une extrémité conçue sous forme d'un embout (2) en forme de disque.

13. Ecouvillon selon l'une quelconque des revendications 6 à 11, **caractérisé par** un corps à symétrie ponctuelle par rapport au point médian, conçu notamment sous forme d'un haltère.

14. Ecouvillon selon l'une quelconque des revendications 6 à 13, **caractérisé en ce qu'**à l'état de nettoyage, l'extrémité antérieure est conçue de façon élastique dans le sens radial.

15. Ecouvillon selon l'une quelconque des revendications 6 à 14, **caractérisé en ce que** le rapport entre la longueur et le diamètre est situé entre 1,5 et 3.

16. Configuration constituée d'une conduite (7), notamment d'un flexible constitué d'une âme en téflon avec tissu support métallique, destiné au transport d'une colle fusible liquide et d'un écouvillon (9) disposé à l'intérieur de cette dernière de façon amovible, selon l'une quelconque des revendications 6 à 15, **caractérisé en ce que** la conduite (7) peut être chauffée à une température située entre 130 ° C et 200 ° C.

17. Configuration selon la revendication 16, **caractérisée en ce que** le diamètre intérieur de la conduite (7) est supérieur au diamètre extérieur de l'écouvillon (9).

18. Configuration selon la revendication 17, **caractérisée en ce que** le diamètre intérieur de la conduite (7) est d'environ 8 mm et le diamètre extérieur de l'écouvillon (9) est d'environ 6 mm.

19. Configuration selon la revendication 17, **caractérisée en ce que** le diamètre intérieur de la conduite (7) est d'environ 13 mm et le diamètre extérieur de l'écouvillon (9) est d'environ 10 mm.

20. Utilisation d'un écouvillon (9), présentant les caractéristiques de l'une quelconque des revendications 6 à 15, destiné au nettoyage d'un flexible pouvant être chauffé et présentant une âme en téflon et un tissu de soutien métallique et destiné au transport de colle liquide.

21. Utilisation selon la revendication 20, la face externe de l'écouvillon (9) étant adaptée par l'intermédiaire de ses deux extrémités au diamètre interne de la conduite (7) de manière à ce que sur toute sa périphérie, la face externe de l'écouvillon (9) soit appliquée à cet endroit, très près de la face interne de la conduite et qu'elle présente dans sa zone médiane un évidement périphérique en forme de I.

22. Utilisation selon l'une quelconque des revendications 20 ou 21, la face externe de l'écouvillon (9) formant avec la face interne de la conduite (7) un joint, permettant de séparer à l'état de nettoyage, le matériau disposé à l'avant et à l'arrière de l'écouvillon (9).
